# EUROPÄISCHE PATENTSCHRIFT

(11) **EP 0 474 043 B1**
(45) Veröffentlichungstag und Bekanntmachung des Hinweises auf die Patenterteilung: **18.08.1993**
(21) Anmeldenummer: 91114037.4
(22) Anmeldetag: 22.08.1991
(51) Int. Cl.: C01B 3/00

(54) **Verfahren zur Herstellung aktiver Magnesiumhydrid-Magnesium-Wasserstoff-Speichersysteme und Vorrichtung zur Durchführung des Verfahrens**
Process for manufacturing active storage systems based on magnesium hydride-magnesium-hydrogen and apparatus therefor
Procédé de fabrication de systèmes actifs de stockage à base de hydrure de magnésium-magnésium hydrogène et dispositif à cet effet

(30) Priorität: 04.09.1990 DE 4027976
(43) Veröffentlichungstag der Anmeldung: 11.03.1992
(73) Patentinhaber: Th. Goldschmidt AG, 45127 Essen (DE)
(72) Erfinder: Knott, Wilfried, Dr., W-4300 Essen 1 (DE); Klein, Klaus-Dieter, Dr., W-5900 Siegen 31 (DE); Koerner, Götz, Dr., W-4300 Essen (DE)

(56) Entgegenhaltungen:
- EP-A- 0 112 548
- EP-A- 0 316 968

## Beschreibung

Die Erfindung betrifft ein Verfahren zur Herstellung aktiver, reversibel H₂ aufnehmender Magnesiumhydrid-Magnesium-Wasserstoff-Speichersysteme durch Dotieren von fein verteiltem Magnesium mit Nickel, welches durch Zersetzung von Tetracarbonylnickel auf der Oberfläche des Magnesiums abgeschieden wird sowie eine Vorrichtung zur Durchführung des Verfahrens. Unter dem Begriff "fein verteiltes Magnesium" ist dabei nach dem Stand der Technik ein Magnesiumpulver von 0,3 bis 0,045 mm (50 bis 325 mesh) zu verstehen.

Aus der EP-A-0 112 548 ist ein Verfahren zur Herstellung aktiver, reversibel H₂ aufnehmender Magnesiumhydrid-Magnesium-Wasserstoff-Speichersysteme bekannt, bei dem man Magnesiumhydrid oder metallisches Magnesium in fein verteilter Form durch Kontakt mit einer Lösung eines Metallkomplexes und/oder einer metallorganischen Verbindung eines Metalles der IV. bis VIII. Nebengruppe des periodischen Systems, gegebenenfalls in Gegenwart von Wasserstoff umsetzt, wobei das jeweilige Übergangsmetall an der Oberfläche der Magnesiumhydrid- und/oder der Magnesiumpartikel abgeschieden wird.

Als Dotierungsmittel (Abscheidungsmittel) werden insbesondere Nickelkomplexe und/oder nickelorganische Verbindungen eingesetzt, wobei der Bis(cyclooctadien)-nickel-(O)-Komplex Ni(COD)₂ besonders bevorzugt wird. Dieser Komplex wird in Toluol oder Tetrahydrofuran zusammen mit dem feinteiligen Magnesium suspendiert. Der Komplex wird entweder thermisch zersetzt oder aber es wird das komplex gebundene Cyclooctadien zu Cyclooctan hydriert, wobei jeweils Nickel abgeschieden wird.

Das abgeschiedene Nickel schlägt sich dabei auf der Oberfläche des Magnesiums nieder.

Das Dotierungsreagens Ni(COD)₂ ist jedoch teuer, toxisch und schwer zu handhaben. Beispielsweise induzieren Katalysatoren einen progressiven Zerfall.

In der EP-A-0 316 968, welche der vorgenannten europäischen Patentanmeldung entspricht und durch Teilung entstanden ist, wird ein Verfahren zur Herstellung von Magnesiumhydrid-Magnesium-Wasserstoff-Speichersystemen beansprucht, bei dem man metallisches Magnesium in fein verteilter Form mit einem Übergangsmetall der IV. bis VIII. Nebengruppe des periodischen Systems in fein verteilter Form mechanisch in innigen Kontakt bringt und zwar vorzugsweise durch Vermahlen. Auch dieses Verfahren läuft in Gegenwart eines organischen Lösungsmittels ab.

Die vorliegende Erfindung befaßt sich mit dem technischen Problem der einfachen, sicheren und darüber hinaus wirtschaftlichen Dotierung des für Wasserstoff-Speichersysteme bestimmten Magnesiums mit Nickel. Dabei soll besonderer Wert auf eine sichere, das Bedienungspersonal nicht gefährdende und umweltfreundliche Verfahrensweise gelegt werden. Es soll ferner ein Magnesiumhydridpulver erhalten werden, welches freifließend und deshalb leicht handhabbar ist.

Diese Vorgaben werden durch das erfindungsgemäße Verfahren erfüllt, welches dadurch gekennzeichnet ist, daß man
a) einen Druckreaktor mit einem Gemisch aus feinteiligem Magnesium und einer zur Dotierung ausreichenden Menge Nickel beschickt, sodann
b) den Druckreaktor mit mindestens einer zur quantitativen Überführung des Nickels in Tetracarbonylnickel ausreichenden Menge Kohlenoxid beaufschlagt, diese Mischung unter intensivem Rühren auf eine Temperatur von 70 bis 90°C erwärmt und bei dieser Temperatur 15 bis 60 Minuten beläßt,
c) hieran anschließend den Druckreaktor bis zur vollständigen Zersetzung des Tetracarbonylnickels auf eine Temperatur von ≧ 180°C aufheizt, danach
d) das Kohlenoxid aus dem Druckreaktor abzieht und anschließend
e) das erhaltene dotierte Magnesium in an sich bekannter Weise bei Temperaturen von ≧ 300°C und erhöhtem Druck hydriert.

In der Stufe a) wird der Druckreaktor zunächst mit dem Gemisch aus feinteiligem Magnesium und feinteiligem Nickel beschickt. Die Teilchengröße des Magnesiums soll dabei vorzugsweise in einem Bereich von 20 bis 100 µm liegen und insbesondere der Siebfraktion eines 270 mesh-Siebes entsprechen. Die Teilchengröße des Nickels ist weniger kritisch, jedoch ist auch hier eine geringe Teilchengröße für die Reaktion mit CO von Vorteil.

Die Menge des dem Magnesiumpulver zugesetzten Nickels soll dabei der Menge entsprechen, die bei der Dotierung auf der Oberfläche des Magnesiumpulvers niedergeschlagen werden soll. Bei der Dotierung wird eine Menge von etwa 1,5 bis 2,5 Gew.-% Nickel, bezogen auf Magnesium, angestrebt. Der Reaktor wird somit mit einem Gemisch von 97,5 bis 98,5 Gew.-% Mg, Rest Ni beschickt.

Das Gemisch wird im Reaktor intensiv gerührt. Der Druckreaktor wird nun mit Kohlenoxid (CO) beaufschlagt. Die eingesetzte Menge Kohlenoxid soll dabei mindestens der Nickelmenge entsprechen, die in Tetracarbonylnickel überführt werden soll, entsprechend der Gleichung

Ni + 4 CO → Ni(CO)₄

Die Molmenge Ni : CO beträgt somit mindestens 1 : 4.

Es ist von Vorteil, einen gewisse Überdruck von etwa 0,3 bis 0,6 MPa einzustellen.

Der Reaktor wird nun beheizt, bis sich im Innenraum eine Temperatur von etwa 70 bis 90°C einstellt. Bei dieser Temperatur erfolgt in kurzer Zeit (15 bis 60 Minuten) die Bildung des Tetracarbonylnickels.

Die Abscheidung des Nickels auf der Oberfläche des Magnesiums erfolgt nun in einfacher Weise durch Zersetzung des Tetracarbonylnickels durch Erhöhung der Temperatur im Reaktor auf ≧ 180°C. Dabei wird das am Tetracarbonylnickel gebundene Kohlenoxid wieder frei und kann, gegebenenfalls nach Ersatz von etwaigen CO-Verlusten, einem zweiten Druckreaktor zugeführt werden, der mit Magnesium-Nickel-Gemisch gefüllt ist, wobei die Verfahrensschritte a) bis d) erneut durchlaufen werden.

In Hinblick auf die niedrigen Kosten kann aber das Kohlenoxid auch nach der Stufe d) oxidiert und in CO₂ überführt werden. Zweckmäßig vermischt man das Kohlenoxid mit einem niedrig siedenden gasförmigen Kohlenwasserstoff, wie Propan oder Butan und fackelt das Gasgemisch ab.

Um auch Spuren von Tetracarbonylnickel aus dem Kohlenoxid-Abgas zu entfernen, empfiehlt es sich, nach der Verfahrensstufe d) das im wesentlichen aus CO bestehende Abgas durch einen zweiten Reaktor zu leiten, der mit feinteiligem Magnesium beschickt und auf eine Temperatur von ≧ 300°C erwärmt ist. Beim Durchgang durch einen solchen zweiten Zersetzungsreaktor erfolgt mit Sicherheit die Zersetzung von etwaigen im Abgas noch enthaltenen Spuren Tetracarbonylnickel. Das so gereinigte Abgas kann dann in der oben beschriebenen Weise verbrannt werden.

Das im Druckreaktor verbliebene Nickel-dotierte Magnesiumpulver wird nun in an sich bekannter Weise hydriert, indem man es bei ≧ 320°C und einem Druck von 0,5 bis 5 MPa mit Wasserstoff behandelt. Nach Aufnahme des Wasserstoffs und Bildung des Magnesiumhydrids läßt man den Reaktor abkühlen und entnimmt schließlich das Reaktionsprodukt.

Es war dabei in besonderer Weise überraschend, daß die Hydrierung des dotierten Magnesiums durch das bei der Reaktion eingesetzte Kohlenoxid nicht beeinträchtigt oder verhindert wird, da aus Journal of Less Common Metals, 158 (1990) L1 bis L7 bekannt ist, daß Kohlenoxid als Katalysatorgift für die Hydrierungsreaktion angesehen werden muß.

Ein weiterer Gegenstand der Erfindung besteht in einer Vorrichtung, welche für die Durchführung des erfindungsgemäßen Verfahrens besonders geeignet ist.

Die erfindungsgemäße Vorrichtung ist gekennzeichnet durch
a) einen beheizbaren Druckreaktor 1 mit Rührer 2, mindestens einer Zuleitung 3 für Kohlenoxid, Wasserstoff und Inertgas, einem Befüllstutzen 4 und einem Sumpfablaß 5,
b) einem beheizbaren und mit feinteiligem Magnesium gefüllten Zersetzungsreaktor 6 mit Zuleitung 8 für das aus dem Druckreaktor 1 abgeführte verunreinigte Kohlenoxid und Ableitung 9 für das den Zersetzungsreaktor verlassende gereinigte Kohlenoxid,
c) wobei der Zersetzungsreaktor 6 über die Zuleitung 8, die in den Sumpfbereich 7 des Zersetzungsreaktors 6 eintritt und aus der Zuleitung 3 ausmündet, mit dem Druckreaktor 1 verbunden ist, und
d) wobei in der Zuleitung 3 vor und hinter der abzweigenden Zuleitung 8, sowie in der abzweigenden Zuleitung 8 Absperrventile 10, 11 und 12 angeordnet sind.

Vorzugsweise mündet die Ableitung 9 in einen mit Brenngas beaufschlagbaren Brenner 13.

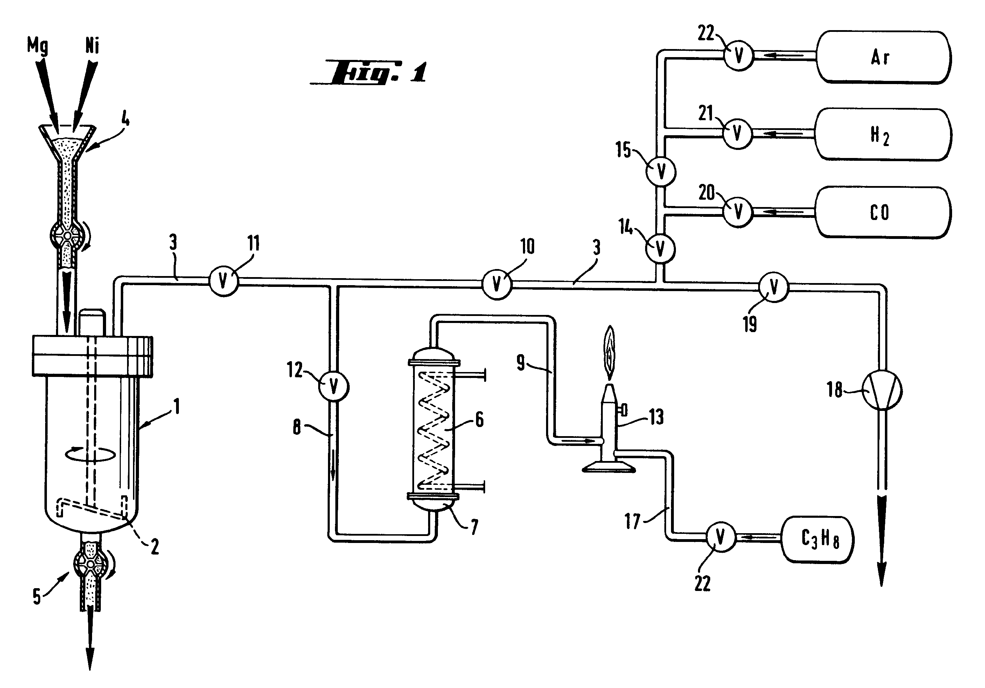

Das erfindungsgemäße Verfahren und die erfindungsgemäße Vorrichtung lassen sich an Hand der Figur 1 noch näher erläutern:

In den Reaktor 1 wird über den Befüllstutzen 4 das feinteilige Magnesium und das feinteilige Nickel eingefüllt. Beide Metallpulver werden durch den Rührer 2 innig miteinander vermischt. Bei geschlossenen Ventilen 12 und 14 und geöffneten Ventilen 11, 10 und 19 wird der Reaktor 1 mittels der Pumpe 18 evakuiert, mittels des Rührers 2 intensiv vermischt und unter Rühren aufgeheizt. Nachdem eine Innentemperatur von 70 bis 90°C erreicht ist, wird das Ventil 19 geschlossen. Die Ventile 14 und 20 werden geöffnet. Es strömt nun CO in den Reaktor 1, wobei nach Einbringen der erforderlichen Menge, gemessen am Druckanstieg, die Ventile 20, 14, 10 und 11 geschlossen werden. Es bildet sich nun innerhalb von 15 bis 60 Minuten Tetracarbonylnickel, wobei die Reaktion quantitativ verläuft. Durch weiteres Aufheizen des Reaktors auf eine Temperatur von ≧ 180°C wird das im Reaktor 1 gebildete Tetracarbonylnickel zersetzt. Das freiwerdende Nickel schlägt sich auf der Oberfläche des gerührten Magnesiumpulvers gleichmäßig nieder. Nach erfolgter Zersetzung werden die Ventile 11 und 12 geöffnet. Das Abgas, welches aus CO und gegebenenfalls geringen Mengen Tetracarbonylnickel besteht, strömt durch den auf ≧ 300°C aufgeheizten Zersetzungsreaktor 6. Das den Zersetzungsreaktor 6 verlassende gereinigte und von den Tetracarbonylnickelspuren befreite Abgas wird mit einem Heizgas/Luft-Gemisch, welches über Ventil 22 durch die Leitung 17 einem Brenner 13 zugeführt wird, vermischt und verbrannt.

Nach Schließen des Ventils 12 und Öffnen der Ventile 21, 15, 14 10 und 11 wird Wasserstoff in den Reaktor 1 eingespeist, in dem nun die Hydrierung des dotierten Magnesiums bei 300°C und einem Wasserstoffdruck von 0,5 bis 5 MPa erfolgt. Nach der Hydrierung wird nach Schliessen des Ventils 21 und Öffnen des Ventils 22 der Reaktor 1 mit Argon gespült und abgekühlt. Nach Abkühlung des Reaktors 1 kann das dotierte Magnesiumhydrid dem Reaktor 1 über den Sumpfablaß 5 als freifließendes Pulver entnommen werden.

In den folgenden Beispielen wird das erfindungsgemäße Verfahren noch näher erläutert.

### Beispiel 1

500 g (20,58 mol) Magnesiumpulver mit einer mittleren Korngröße von 54 µm (270 mesh) werden zusammen mit 10 g (0,17 mol) Nickelpulver mit einer mittleren Korngröße von 2,8 µm unter Rühren in einem 5-1-Rührautoklaven 1 über den Befüllstutzen 4 vorgelegt. Der Reaktor 1 wird wird über die Zuleitung 3 mit einer Pumpe 18 verbunden und evakuiert (Druck im Autoklaven 1 133 Pa). Die Ventile 20, 14, 10 und 11 werden geöffnet und der Reaktor 1 mit CO befüllt, bis sich im Reaktor ein CO-Druck von 0,42 MPa einstellt. Nach Schliessen des Ventils 11 wird der Reaktor 1 auf 348°K unter ständigem Rühren aufgeheizt. Nach 60 Minuten Reaktionszeit wird der Autoklav 1 auf 473°K und der Reaktor 6 auf 573°K aufgeheizt.

Bei geschlossenem Ventil 10 und geöffneten Ventilen 11 und 12 strömt das im Reaktor 1 befindliche CO in und durch den Zersetzungsreaktor 6, der mit Magnesiumpulver einer mittleren Korngröße von 54 µm beschickt ist. Das den Reaktor 6 verlassende und von Spuren Tetracarbonylnickel gereinigte CO wird über die Leitung 9 einem Brenner 13 zugeführt, in dem es mit Propangas vermischt und verbrannt wird.

Nach völligem Druckabbau wird das Ventil 12 geschlossen, der Zersetzungsreaktor 6 abgekühlt und der Brenner 13 gelöscht.

Nun wird der Reaktor 1 erneut über die Leitung 13 mittels der Pumpe 18 evakuiert. Bei geöffneten Ventilen 21, 15, 14, 10 und 11 wird der Reaktor 1 mit Wasserstoff bis zu einem Druck von 0,5 MPa beaufschlagt. Nach dem Schliessen des Ventils 11 wird der Reaktor 1 auf 623°K erhitzt. Druck- und Temperaturverlauf wird über einen Mehrkanal-schrei ber registriert. Mit einsetzender Hydrierung (Reaktionstemperatur ≧ 573°K wird ein permanenter H₂-Druck von 0,85 MPa an den Reaktor 1 gelegt. Nach etwa 7 Stunden ist die Reaktion beendet. Nach dem Erkalten des Autoklaven 1 wird dieser nochmals evakuiert und über die Leitung 3 mit Argon geflutet. Über das Sumpfablaßventil 5 wird das erhaltene Magnesiumhydrid als freifließendes Pulver in ein ausgeheiztes und mit Argon befülltes Gefäß entleert.
- Auswaage:: 528,7 g (96% der Theorie)

Der Hydridgehalt einer Probe wird nach Zh. Neorgh. Khim. 6, 1961 gasvolumetrisch durch Zersetzung mit H₂CrO₄ bestimmt. Es wird ein Hydridgehalt von 7,0% ermittelt.

Zum Vergleich wird eine Verbrennungsanalyse durchgeführt, die ebenfalls einen Hydridgehalt von 7,0% ergibt.

Eine AAS-Analyse belegt einen Nickelgehalt von 1,8% (1,84 ≈ Gehalt berechnet).

## Patentansprüche

1. Verfahren zur Herstellung aktiver, reversibel H₂ aufnehmender Magnesiumhydrid-Magnesium-Wasserstoff-Speichersysteme durch Dotieren von fein verteiltem Magnesium mit Nickel, welches durch Zersetzung von Tetracarbonylnickel auf der Oberfläche des Magnesiums abgeschieden wird, dadurch gekennzeichnet, daß man
a) einen Druckreaktor mit einem Gemisch aus feinteiligem Magnesium und einer zur Dotierung ausreichenden Menge Nickel beschickt, sodann
b) den Druckreaktor mit mindestens einer zur quantitativen Überführung des Nickels in Tetracarbonylnickel ausreichenden Menge Kohlenoxid beaufschlagt, diese Mischung unter intensivem Rühren auf eine Temperatur von 70 bis 90°C erwärmt und bei dieser Temperatur 15 bis 60 Minuten beläßt,
c) hieran anschließend den Druckreaktor bis zur vollständigen Zersetzung des Tetracarbonylnickels auf eine Temperatur von ≧ 180°C aufheizt, danach
d) das Kohlenoxid aus dem Druckreaktor abzieht und anschließend
e) das erhaltene dotierte Magnesium in an sich bekannter Weise bei Temperaturen von ≧ 300°C und erhöhtem Druck hydriert.

2. Verfahren nach Anspruch 1, dadurch gekennzeichnet, daß man Magnesium einer Teilchengröße von 20 bis 100 µm verwendet.

3. Verfahren nach Anspruch 1 oder 2, dadurch gekennzeichnet, daß man im Verfahrensschritt b) im Druckreaktor vor dem Aufheizen einen Kohlenoxid-Druck von 0,3 bis 0,6 mPa einstellt.

4. Verfahren nach Anspruch 1, 2 oder 3, dadurch gekennzeichnet, daß man im Verfahrensschritt d) das aus dem Reaktor abgezogene Kohlenoxid durch einen mit feinteiligem Magnesium gefüllten und auf eine Temperatur von ≧ 300°C aufgeheizten Zersetzungsreaktor führt.

5. Verfahren nach Anspruch 4, dadurch gekennzeichnet, daß man das Kohlenoxid nach dem Durchgang durch den Zersetzungsreaktor, gegebenenfalls zusammen mit einem niedrig siedenden Kohlenwasserstoff, verbrennt.

6. Verfahren nach Anspruch 5, dadurch gekennzeichnet, daß man als niedrig siedenden Kohlenwasserstoff Propan oder Butan verwendet.

7. Verfahren nach einem oder mehreren der vorhergehenden Ansprüche, dadurch gekennzeichnet, daß man das erhaltene Ni-dotierte Magnesium bei Temperaturen von ≧ 320°C und einem Wasserstoffdruck von 0,5 bis 5 MPa hydriert.

8. Vorrichtung zur Durchführung des Verfahrens nach den Ansprüchen 1 bis 7, gekennzeichnet durch
a) einen beheizbaren Druckreaktor 1 mit Rührer 2, mindestens einer Zuleitung 3 für Kohlenoxid, Wasserstoff und Inertgas, einem Befüllstutzen 4 und einem Sumpfablaß 5,
b) einem beheizbaren und mit feinteiligem Magnesium gefüllten Zersetzungsreaktor 6 mit Zuleitung 8 für das aus dem Druckreaktor 1 abgeführte verunreinigte Kohlenoxid und Ableitung 9 für das den Zersetzungsreaktor verlassende gereinigte Kohlenoxid,
c) wobei der Zersetzungsreaktor 6 über die Zuleitung 8, die in den Sumpfbereich 7 des Zersetzungsreaktors 6 eintritt und aus der Zuleitung 3 ausmündet, mit dem Druckreaktor 1 verbunden ist, und
d) wobei in der Zuleitung 3 vor und hinter der abzweigenden Zuleitung 8, sowie in der abzweigenden Zuleitung 8 Absperrventile 10, 11 und 12 angeordnet sind.

9. Vorrichtung nach Anspruch 8, dadurch gekennzeichnet, daß die Ableitung 9 in einen mit Brenngas beaufschlagbarem Brenner 13 mündet.

## Claims

1. Process for the preparation of active magnesium hydride/magnesium/hydrogen storage systems which reversibly take up H₂, by doping finely divided magnesium with nickel which is deposited on the surface of the magnesium by decomposition of nickel tetracarbonyl, characterised in that
a) a pressure reactor is charged with a mixture of finely divided magnesium and an amount of nickel sufficient for the doping, then
b) the pressure reactor is charged with an amount of carbon monoxide which is at least sufficient for quantitative conversion of the nickel into nickel tetracarbonyl, and this mixture is warmed to a temperature of from 70 to 90°C with vigorous stirring and is left at this temperature for from 15 to 60 minutes,
c) the pressure reactor is then heated to a temperature of ≧ 180°C until complete decomposition of the nickel tetracarbonyl, then
d) the carbon monoxide is removed from the pressure reactor, and
e) the doped magnesium obtained is hydrogenated in a manner known per se at temperatures of ≧ 300°C and at superatmospheric pressure.

2. Process according to Claim 1, characterised in that magnesium having a particle size of from 20 to 100 µm is used.

3. Process according to Claim 1 or 2, characterised in that a carbon monoxide pressure of from 0.3 to 0.6 mPa is established in the pressure reactor in process step b) before the heating.

4. Process according to Claim 1, 2 or 3, characterised in that the carbon monoxide withdrawn from the reactor is passed in process step d) through a decomposition reactor which is filled with finely divided magnesium and is heated to a temperature of ≧ 300°C.

5. Process according to Claim 4, characterised in that the carbon monoxide is burnt, optionally together with a low-boiling hydrocarbon, after passing through the decomposition reactor.

6. Process according to Claim 5, characterised in that the low-boiling hydrocarbon used is propane or butane.

7. Process according to one or more of the preceding claims, characterised in that the Ni-doped magnesium obtained is hydrogenated at temperatures of ≧ 320°C and a hydrogen pressure of from 0.5 to 5 MPa.

8. Apparatus for carrying out the process according to Claims 1 to 7, characterised by
a) a heatable pressure reactor 1 with stirrer 2, at least one feed line 3 for carbon monoxide, hydrogen and inert gas, a filling port 4 and a base outlet 5,
b) a heatable decomposition reactor 6 which is filled with finely divided magnesium and has a feed line 8 for the impure carbon monoxide withdrawn from the pressure reactor 1 and an outlet line 9 for the purified carbon monoxide leaving the decomposition reactor,
c) the decomposition reactor 6 being connected to the pressure reactor 1 via feed line 8, which enters the base region 7 of the decomposition reactor 6 and branches off from feed line 3, and
d) shut-off valves 10, 11 and 12 being arranged in feed line 3 before and after the branched-off feed line 8 and in the branched-off feed line 8.

9. Apparatus according to Claim 8, characterised in that the outlet line 9 runs into a burner 13 supplied with fuel gas.

## Revendications

1. Procédé de fabrication de systèmes actifs de stockage à base d'hydrure de magnésium-magnésium-hydrogène absorbant H₂ de manière réversible, par dopage de magnésium finement divisé avec du nickel qui est déposé sur la surface du magnésium par décomposition de tétracarbonylnickel, caractérisé en ce que :
a) on introduit, dans un réacteur sous pression, un mélange de magnésium finement divisé et une quantité de nickel suffisante pour le dopage, ensuite
b) on amène, dans le réacteur sous pression, une quantité de dioxyde de carbone suffisante pour la transformation quantitative du nickel en tétracarbonylnickel, on chauffe ce mélange à une température comprise entre 70 et 90°C, tout en l'agitant énergiquement, et on le maintient à cette température pendant 15 à 60 minutes,
c) ensuite, on chauffe le réacteur sous pression à une température supérieure ou égale à 180°C, jusqu'à la décomposition complète du tétracarbonylnickel, puis
d) on retire l'oxyde de carbone du réacteur sous pression et ensuite,
e) on hydrogène le magnésium dopé obtenu, de manière connue en soi, à une température supérieure ou égale à 300°C et à une pression augmentée.

2. Procédé selon la revendication 1, caractérisé en ce qu'on utilise du magnésium ayant une grosseur de particules de 20 à 100 µm.

3. Procédé selon la revendication 1 ou 2, caractérisé en ce qu'on règle une pression d'oxyde de carbone de 0,3 à 0,6 MPa dans le réacteur sous pression, lors de l'étape de procédé b), avant le chauffage.

4. Procédé selon la revendication 1, 2 ou 3, caractérisé en ce que, lors de l'étape de procédé d), on amène l'oxyde de carbone retiré du réacteur dans un réacteur de décomposition rempli de magnésium finement divisé, et chauffé à une température de ≧ 300°C.

5. Procédé selon la revendication 4, caractérisé en ce qu'on brûle l'oxyde de carbone après son passage dans le réacteur de décomposition, éventuellement avec un hydrocarbure à point d'ébullition bas.

6. Procédé selon la revendication 5, caractérisé en ce qu'on utilise, comme hydrocarbure à point d'ébullition bas, du propane ou du butane.

7. Procédé selon une ou plusieurs des revendications précédentes, caractérisé en ce qu'on hydrogène le magnésium obtenu, dopé au nickel, à une température de ≧ 320°C et à une pression d'hydrogène de 0,5 à 5 MPa.

8. Dispositif pour la mise en oeuvre du procédé selon les revendications 1 à 7, caractérisé par :
a) un réacteur sous pression 1 pouvant être chauffé, comportant un agitateur 2, au moins une conduite d'amenée 3 pour l'oxyde de carbone, l'hydrogène et un gaz inerte, une tubulure de remplissage 4 et une conduite d'évacuation 5,
b) un réacteur de décomposition 6 pouvant être chauffé et rempli de magnésium finement divisé, comportant une conduite d'amenée 8 pour l'oxyde de carbone impur évacué du réacteur sous pression 1, et une conduite d'évacuation 9 pour l'oxyde de carbone purifié sortant du réacteur de décomposition,
c) le réacteur de décomposition 6 étant relié au réacteur sous pression 1 par la conduite d'amenée 8 qui pénètre dans la zone de fond 7 du réacteur de décomposition 6 et débouche de la conduite d'amenée 3, et
d) des soupapes d'arrêt 10, 11 et 12 étant disposées dans la conduite d'amenée 3, en amont et en aval de la conduite d'embranchement 8, ainsi que dans la conduite d'embranchement 8.

9. Dispositif selon la revendication 8, caractérisé en ce que la conduite d'évacuation 9 débouche dans un brûleur 13 pouvant être alimenté en gaz de combustion.
